(19) Europäisches Patentamt
European Patent Office
Office européen des brevets

(11) Veröffentlichungsnummer: **0 165 565 B1**

(12) # EUROPÄISCHE PATENTSCHRIFT


(45) Veröffentlichungstag der Patentschrift: **07.12.88**

(21) Anmeldenummer: **85107330.4**

(22) Anmeldetag: **13.06.85**

(51) Int. Cl.[4]: **B 05 B 13/04**, B 05 B 7/22, C 23 C 4/12


(54) **Vakuum-Plasma-Beschichtungsanlage.**


(30) Priorität: **19.06.84 DE 3422718**

(43) Veröffentlichungstag der Anmeldung: **27.12.85 Patentblatt 85/52**

(45) Bekanntmachung des Hinweises auf die Patenterteilung: **07.12.88 Patentblatt 88/49**

(84) Benannte Vertragsstaaten: **CH DE FR GB IT LI NL**

(56) Entgegenhaltungen:
**DE-A-2 748 490**
**GB-A-1 584 371**
**GB-A-2 014 194**
**US-A-4 312 292**
**US-A-4 328 257**



(73) Patentinhaber: **PLASMAINVENT AG, Im Oberleh 2, CH-6300 Zug (CH)**

(72) Erfinder: **Gruner, Heiko, Dr., Kehlenstrasse 104, CH-5712 Beinwiel am See (CH)**

(74) Vertreter: **Lehn, Werner, Dipl.-Ing. et al, Hoffmann, Eitle & Partner Patentanwälte Arabellastrasse 4, D-8000 München 81 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).





ACTORUM AG

**Beschreibung**

Die Erfindung bezieht sich auf eine Vakuum-Plasma-Beschichtungsanlage, mit einem in einer Unterdruckkammer angeordneten Plasmabrenner, der in mehreren Achsen gegenüber dem zu beschichtenden Teil verschiebbar angeordnet ist, während das zu beschichtende Teil gleichzeitig mit dem Plasmabrenner in mehreren Freiheitsgraden bewegbar angeordnet ist.

Eine derartige Vakuum-Plasma-Beschichtungsanlage ist beispielsweise aus der US-PS 4 328 257 bekannt. Bei dieser Anlage wird in einer Unterdruckkammer ein Plasmabrenner betrieben, welcher in 4 Achsen verschiebbar über dem Teil angeordnet ist, das für die Beschichtung im Plasmaspritzverfahren vorgesehen ist. Auch das zu beschichtende Teil kann mit mehreren Freiheitsgraden gleichzeitig mit dem Plasmabrenner bewegt werden, so dass die Beschichtung der Substratoberfläche an allen Stellen gleichmässig durchgeführt werden kann.

Um auch sehr komplizierte Oberflächengeometrien mit einer gezielt eingestellten Schichtdickenverteilung zu überziehen, wurde, wie z.B. im DVS-Bericht Nr. 80 auf den Seiten 102, 103 und 104 beschrieben, die Bewegung des Plasmabrenners einem speziell für das Arbeiten im Unterdruck modifizierten Industrieroboter übertragen. Zusammen mit der Achse der Substratbewegung entsteht so ein frei programmierbares, 6-achsiges Bewegungssystem zwischen Plasmastrahl und Substratoberfläche. Ein einmal für ein bestimmtes, mit gezielter Schichtdickenverteilung zu beschichtendes Teil optimierter Bewegungsablauf wird auf z.B. Magnetband gespeichert und ist jederzeit wieder abrufbar. Damit ist die Reproduzierbakeit der Bewegungsabläufe in der Beschichtungsproduktion gesichert.

Bei beiden bekannten Vakuum-Plasma-Beschichtungsanlagen ist festgelegt, dass für ein gegebenes Spritzpulver und die dazu ausgewählten Beschichtungsparameter ein definierter Spritzabstand zwischen Plasmabrenner und Substrat einzuhalten ist, so wie es bisher auch beim Plasmabeschichten an Atmosphäre praktiziert wurde. Wenn sich nun immer nur ein zu beschichtendes Teil im Bewegungsablauf Plasmabrenner/Substrat befindet, erfolgt die Beschichtung mit hohen Produktionskosten. Mehrere Teile gleichzeitig konnten bisher nicht beschichtet werden.

Der Erfindung liegt die Aufgabe zugrunde, eine Vakuum-Plasma-Beschichtungsanlage der eingangs beschriebenen Art zu schaffen, mit welcher die Beschichtung mehrerer Teile mit grösserer Effektivität und besserem Beschichtungsergebnis sowie in kürzerer Zeit durchgeführt werden kann.

Diese Aufgabe wird mit einer Vakuum-Plasma-Beschichtungsanlage der eingangs beschriebenen Art erfindungsgemäss dadurch gelöst, dass die Vorrichtung zum Bewegen des zu beschichtenden Teils derart aufgebaut ist, dass sie mehrere Teile gleichzeitig hält, dass die Teile gleichzeitig und/oder nacheinander durch den Plasmastrahl bewegbar sind, dass jeweils das dem Plasmabrenner nächste Teil derart im Plasmastrahl angeordnet ist, dass sich dieser wenigstens zeitweise lateral über eine Aussenabmessung dieses Teils hinaus erstreckt, und dass sich alle zu beschichtenden Teile immer innerhalb eines vorbestimmten Spritzabstandsbereiches bewegen, wenn sie sich im Plasmastrahl befinden.

Eine derartige Vakuum-Plasma-Beschichtungsanlage hat den Vorteil, dass mehrere zu beschichtende Teile gleichzeitig dem Plasmastrahl ausgesetzt werden können, und zwar für alle drei Abschnitte des Vakuum-Plasma-Spritzens:

- Zerstäubungsreinigungen (Sputterreinigen) der Substratoberfläche mit Hilfe des übertragenen Lichtbogens negativer Polarität am Substrat,
- Aufheizen der Proben mit Hilfe der Plasmaflamme ohne oder mit zusätzlicher Energie durch den übertragenen Lichtbogen positiver Polarität am Substrat,
- Beschichten durch die in die Plasmaflamme injektierten und aufgeschmolzenen Pulverartikel.

Zweckmässig sind die von dem Plasmabrenner weiter entfernten Teile innerhalb des vorbestimmten Spritzabstandsbereiches durch den Plasmastrahl zurückführbar.

Vorteilhaft sind die zu beschichtenden Teile auf einer Kreisbahn durch den Plasmastrahl führbar und um ihre eigenen Achsen drehbar.

In einer zweckmässigen Ausführungsform sind die zu beschichtenden Teile auf den Satelliten einer Planetengetriebeeinheit angeordnet.

Vorteilhaft haben sich die zu beschichtenden Teile nach einer vollständigen Umdrehung des Planetengetriebes in bezug auf ihre Ausgangsstellung um einen bestimmten Winkel weitergedreht.

Eine Weiterbildung der Erfindung besteht darin, dass mehrere Planetengetriebeeinheiten nacheinander durch einen Takt und/oder Indexantrieb in den Plasmastrahl bewegbar sind. Zu diesem Zweck können sie auf einem grossen Rotationstisch angeordnet sein, aber auch durch einen kammerinternen Teilefördermechanismus nacheinander zur Beschichtungsposition transportiert und wieder entfernt werden.

Der Spritzabstandsbereich, in welchem sich alle zu beschichtenden Teile zu befinden haben, ist vorzugsweise bestimmt durch die Schmelztemperatur, Wärmeleitfähigkeit, Wärmekapazität, Kornkonfiguration und minimale und maximale Korngrösse des Spritzpulvers.

Weiter sind die zu beschichtenden mehreren Teile zweckmässig nacheinander gemeinsam durch einen Lichtbogen negativer Polarität an den Teilen zerstäubungsreinigbar, durch einen Lichtbogen positiver Polarität an den Teilen aufheizbar und durch in die Plasmaflamme und aufgeschmolzene Spritzpulverpartikel beschichtbar. Dabei sind die zu beschichtenden Teile zweckmässig mit einer solchen Geschwindigkeit durch den Plasmastrahl bewegbar, dass beim Zerstäubungsreinigen und beim Aufheizen der Lichtbogen auf den dem Plasmabrenner zugewandten Flächen der Teile kontinuierlich brennt.

Die Erfindung ist im folgenden an Ausführungsbeispielen und anhand der Zeichnungen näher erläutert. In den Zeichnungen zeigen:

Fig. 1 eine schematische Darstellung einer Vakuum-Beschichtungsanlage mit Darstellung nur eines zu beschichtenden Teils,

Fig. 2 eine schematische Darstellung der Beschichtungseffizienz in ihrer optimierten Verteilung über den Plasmastrahlquerschnitt,

Fig. 3 die Schichtdickenverteilung im statischen Spritzbild entlang der Schnittlinie II–II in Fig. 2,

Fig. 4 schematisch die Abhängigkeit der Spritzpulverkorntemperatur nach der Injektion in die Plasmaflamme in Abhängigkeit von der Entfernung vom Ort der Injektion in Flugrichtung für verschieden grosse Pulverkörner,

Fig. 5 schematisch die gleichzeitige Beschichtung von 6 Turbinenschaufeln, angeordnet in einer Planetengetriebeeinheit innerhalb des vorbestimmten Spritzabstandsbereiches,

Fig. 6 schematisch die Verformung der Spritzpulverpartikel nach dem Auftreffen auf der Substratoberfläche in Abhängigkeit von ihrer Partikeltemperatur, und

Fig. 7 schematisch den Ablauf eines Vakuum-Plasma-Beschichtungszyklus im Druck-Zeit-Diagramm.

Das Vakuum-Plasma-Spritzen (VPS) ist eine Weiterentwicklung des atmosphärischen Plasmabeschichtungsverfahrens (APS). Es unterscheidet sich von diesem im Prinzip nur dadurch, dass der Beschichtungsprozess zu einer Vakuumkammer bei Unterdruck stattfindet. Diese Verlagerung ermöglicht eine ganze Reihe von Vorteilen, wovon die wichtigsten folgende sind: Es entstehen dichtere und porenärmere Spritzschichten, da im Vergleich zum atmosphärischen Spritzen die Strahlgeschwindigkeit im Vakuum etwa 2 bis 3 mal höher ist. Diese Schichten haften auch auf glatten Substratoberflächen, da diese vor dem Beschichten mit Hilfe eines übertragenen Lichtbogens von Gaskontamination, Wasserdampf und dünnen Oxidhäuten befreit werden. Gezielte Substrattemperatureinstellungen während oder nach dem Beschichten reduzieren innere Spannungen in der Spritzschicht und bewirken Interdiffusionsprozesse zwischen Schicht und Trägermaterial. Da der Beschichtungsprozess im Vakuum erfolgt, entstehen oxidfreie Schichten. Reaktionsfreudige Spritzpulver finden keinen Reaktionspartner, folglich stimmen ihre Schichten in der chemischen Zusammensetzung mit ihnen selbst überein.

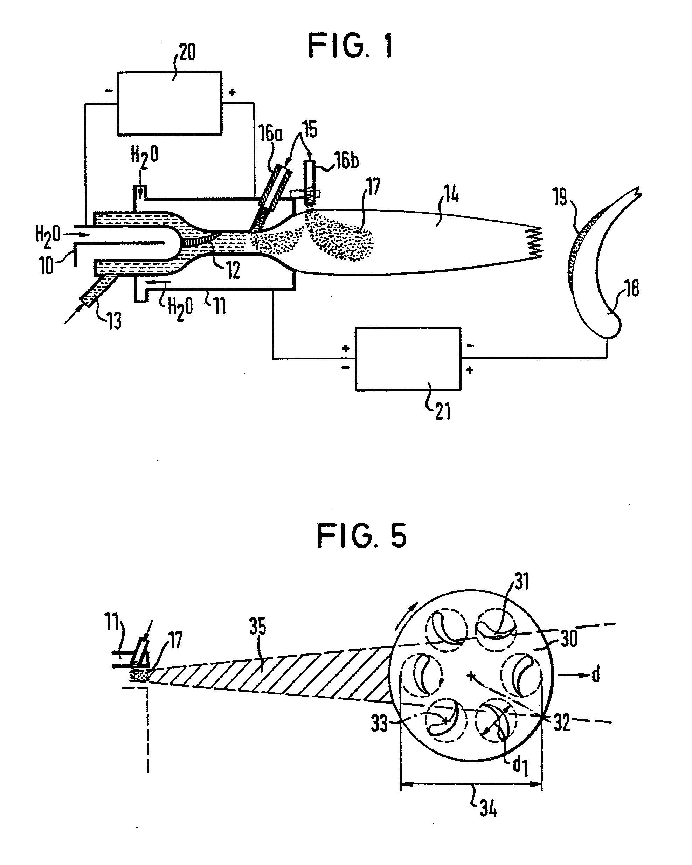

Für die Beschichtung selbst wird, wie in Fig. 1 schematisch dargestellt, zwischen zwei wassergekühlten Elektroden, einer stabförmigen Kathode 10 und einer düsenförmigen Anode 11, ein Lichtbogen 12 betrieben, welcher durch das dem Plasmabrenner zugeführte Gas 13 in die düsenförmige Anode 11 gepresst, eingeschnürt und wandstabilisiert wird. Der Lichtbogen 12 erwärmt, beschleunigt und ionisiert das Gas 13, wodurch eine Plasmaflamme oder ein Plasmastrahl 14 entsteht. Durch die Expansion der Plasmaflamme 14 in den Unterdruck werden die Gasatome, -ionen und/ oder -Moleküle zusätzlich beschleunigt, wobei die Düsenkonfiguration der Anode 11 entsprechend den Druckverhältnissen im Inneren der Düse und ausserhalb in der Vakuumkammer optimiert werden kann. Mit Hilfe eines Trägergases 15 werden über Pulverinjektoren 16a, 16b, die entweder innerhalb oder auch ausserhalb der Anode 11 angeordnet sind, Spritzpulver 17 eines gewünschten Beschichtungsmaterials in den Plasmastrahl eingebracht, beschleunigt, aufgeheizt, dadurch erweicht und/oder aufgeschmolzen und beim Aufprall auf der Oberfläche des zu beschichtenden Werkstücks oder Teils 18 an dieses als Spritzschicht 19 gebunden. Zwischen der Kathode 10 und der Anode 11 ist eine Plasmastromversorgung 20, zwischen Anode 11 und zu beschichtendem Teil 18 eine Lichtbogenstromversorgung 21 angeschlossen.

Für jedes Spritzpulver muss die Energiebilanz in der Plasmaflamme auf die Pulvercharaktere Schmelztemperatur, Wärmeleitfähigkeit, Wärmekapazität, Kornkonfiguration und Kornfraktionierung so abgestimmt werden, dass auch tatsächlich die Erweichung und/oder Aufschmelzung möglichst aller injektierter Partikel erfolgt. Dabei spielen die Injektionsbedingungen des Spritzpulvers 17 in den Plasmastrahl 14 ebenfalls eine entscheidende Rolle: Lage der Injektionsöffnung, ihr Durchmesser und Anstellwinkel in Relation zur Plasmastrahlrichtung und in der Ebene senkrecht zum Plasmastrahl, Pulverförderrate und Trägergasmenge. In diesem Zusammenhang ist zu erwähnen, dass für Mischschichten, Multilayer und gradierte Schichten gleichzeitig und/oder nacheinander auch mit mehreren Pulverinjektoren gearbeitet werden kann, welche sich an verschiedenen Positionen befinden und welche jede für sich in Abstimmung mit dem durch sie injektierten Spritzpulver 17 optimiert worden sind.

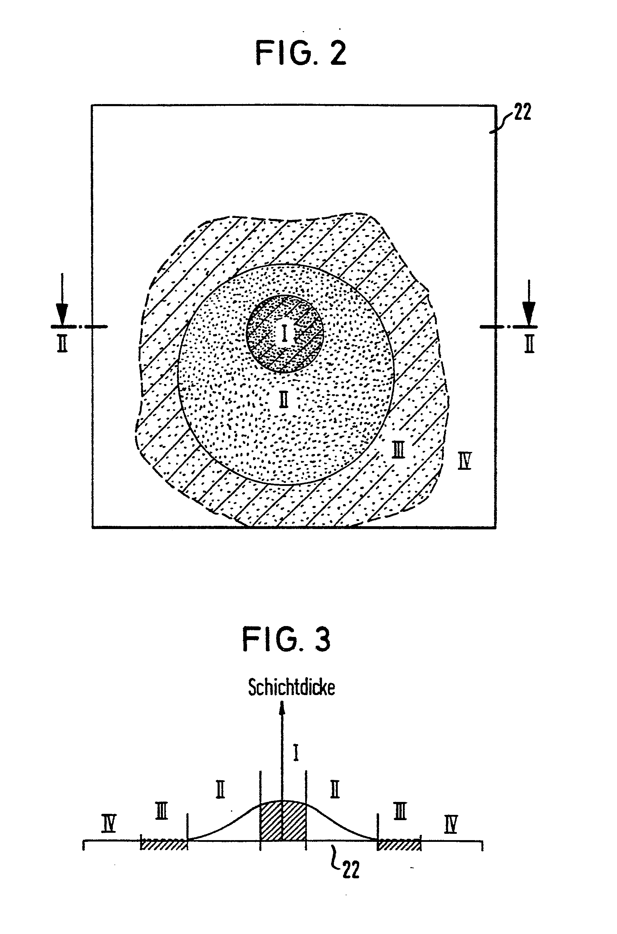

So wird erreicht, dass, wie für das Spritzen an Atmosphäre bekannt, mit einem konzentrierten und in der Beschichtungseffizienz möglichst rotations-symmetrischen Spritzstrahl die Beschichtung durchgeführt werden kann, wobei sich die Substratoberfläche in einem definierten Abstand vor der Anodenöffnung befindet. Fig. 2 zeigt schematisch die Beschichtungseffizienz verteilt über den Plasmastrahlquerschnitt, aufgenommen durch ein statisches Spritzbild auf einer Substratplatte 22 mit grösseren Abmessungen als der Plasmastrahlquerschnitt. Es entsteht eine Spritzschichtverteilung, welche die Substratoberfläche in Relation zur Schichtdicke praktisch in 4 Zonen einteilt:

Zone I, das Zentrum des Spritzstrahls mit hoher Beschichtungseffizienz und praktisch konstanter Aufwachsrate pro Beschichtungszeiteinheit,

Zone II, in der die Beschichtungseffizienz mit zunehmendem Abstand vom Zentrum stark abnimmt,

Zone III, innerhalb der die Substratoberfläche nur noch von peripher fliegenden Pulverpartikeln getroffen wird und praktisch keine zusammenhängende Spritzschicht entsteht, und

Zone IV, innerhalb welcher die Substratoberfläche frei von Spritzpulverpartikeln bleibt.

Für die gleichmässige Bedeckung der Substratplatte 22 muss nun der Plasmastrahl 14 in einem von der Beschichtungseffizienz abhängigen Bewegungsprogramm über die Oberfläche geführt werden, wobei bisher unter Beibehaltung eines festen Spritzabstandes gearbeitet wurde, wie vom atmosphärischen Spritzen her gewohnt. Überraschenderweise ergibt sich nun bei der VPS-Technik nach der Optimierung der genannten Injektionsbedingungen im Zusammenspiel mit Plasmaenergie und Pulvercharakteristik, dass die Beschichtung nicht nur mit einer Lateralausdehnung des Spritzstrahlquerschnittes erfolgen kann, sondern auch mit einer ganz erheblichen Variation des Spritzabstandes, bei gleichbleibender Schichtqualität und unter Festhalten aller übrigen Spritzparameter.

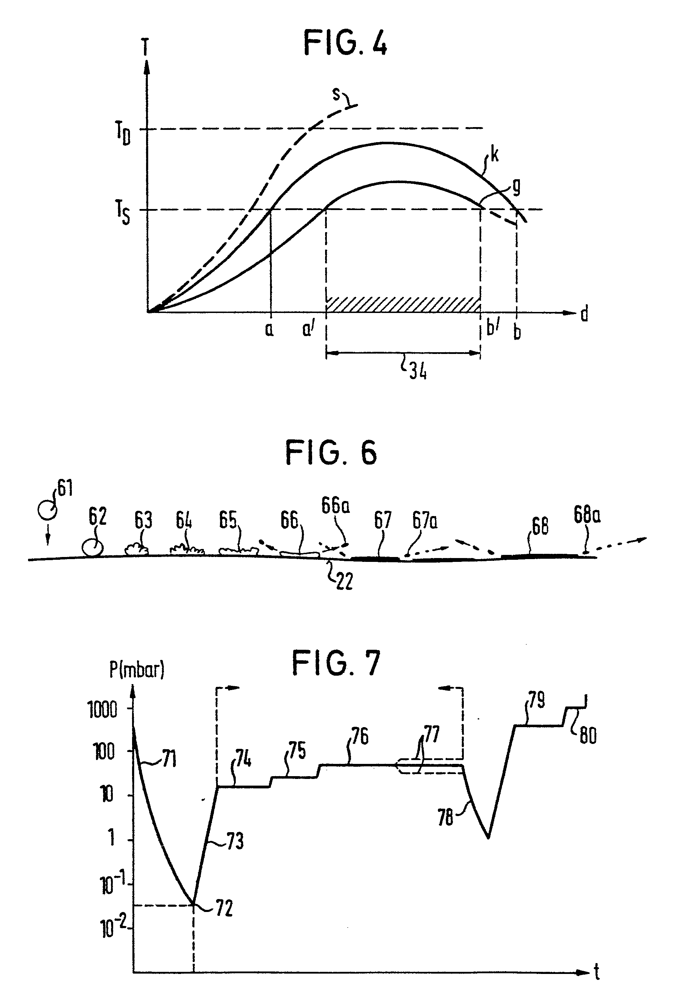

In Abhängigkeit vom Kammerunterdruck ist die VPS-Flamme gegenüber der APS-Flamme etwa 2 bis 4 mal länger, entsprechend der 2 bis 4-fachen Gasgeschwindigkeit. Auch die Partikelgeschwindigkeit des injektierten Pulvers liegt bei der VPS-Beschichtung in der gleichen Grössenordnung über der der APS-Beschichtung. Durch die Variationsmöglichkeiten der Pulverinjektion bei der Anode kann die durch die höhere Partikelgeschwindigkeit verkürzte Verweilzeit des Spritzpulvers in Zonen der Plasmaflamme, in welchen eine Energieaufnahme zur Aufschmelzung oder Erweichung möglich ist, durch Injektion in wesentlich heissere Strahlzonen mehr als kompensiert werden. Für ein gegebenes Spritzpulver mit individueller Pulvercharakteristik, besonders mit einer bestimmten Korngrössenfraktionierung und einem gegebenen Verhältnis Oberfläche/Volumen ergibt sich damit, dass das kleinste Pulverkorn entsprechend Fig. 4 innerhalb von Spritzabstandgrenzen a, b erweicht, aufgeschmolzen und wieder nur erweicht ist, also sich in einem Zustand befindet, welcher für die Erzeugung dichter, porenarmer Spritzschichten notwendig ist. Auch für die grössten vorhandenen Spritzpulverkörner lassen sich Spritzabstandsgrenzen a′, b′ ermitteln, innerhalb der sich dieses Korn für das Spritzen eignet. T ist die mittlere Temperatur des Spritzpulverkorns, d die Entfernung vom Ort der Injektion. $T_s$ ist die Schmelztemperatur, $T_D$ die Verdampfungstemperatur. Die Kurven g, k, sind die Kurven für grösstes und kleinstes Pulverkorn der verwendeten Kornfraktionierung.

Der Überlappungsbereich der Kurven für grösstes und kleinstes Pulverkorn, innerhalb dem das Minimal- und das Maximalkorn wenigstens erweicht sind, legt einen Spritzabstandsbereich fest. Durch geeignete Pulverauswahl wird dieser Spritzabstandsbereich optimiert:

– Die Körner sollten so gross sein, dass die Verdampfungstemperatur $T_D$ nicht erreicht wird, da sie sonst für die Beschichtung verloren gehen (Kurve s in Fig. 4).

– Der maximale Korndurchmesser wird nach oben beschränkt, da die grossen Körner den möglichen Spritzabstandsbereich verkleinern.

Durch diese Limitationen wird das Spritzpulver für VPS-Beschichtungen definiert.

Nachfolgend sind zwei unterschiedliche Anwendungsbeispiele beschrieben:

a) Metallpulver des Legierungstypes: NiCrAlY
Kornfraktionierung 5 . . . 37 µm (–400 mesh)
Kornform: kugelig, Argonverdüst
gewünschte VPS-Spritzschichtstruktur: Dichte Spritzschicht, Resporosität ≤0,5%, homogen.
Plasmaenergie: 48 kW
Kammerdruck: beim Spritzen: 40 mbar
Spritzpulverförderrate: 40 g/min.
Spritzabstandsbereich: 120 mm

b) Oxidpulver des Types: $ZrO_2 + Y_2O_3$
Kornfraktionierung: 10 . . . 60 µm
Kornform: gebrochen, kantig
gewünschte VPS-Spritzschichtstruktur: sehr stark poröse Spritzschicht; Poren gleichmässig über den Schichtquerschnitt verteilt.
Plasmaenergie: 52 kW
Kammerdruck beim Spritzen: 150 mbar
Spritzpulverförderrate: 20 g/min
Spritzabstandsbereich: 140 mm

Beide Anwendungsbeispiele zeigen, dass für sehr unterschiedliche Spritzschichtstrukturen, sehr verschiedene Spritzpulver und in Abhängigkeit davon stark differierende Spritzparameter sich immer ein überraschend hoher Spritzabstandsbereich einstellt, innerhalb dessen die Spritzschichtqualität in den vorgegebenen Grenzen bleibt. Damit ergibt sich die Möglichkeit, gleichzeitig mehrere Teile zu beschichten, wenn sich die Oberflächen dieser Teile so im Plasmastrahl bewegen, dass sie nur innerhalb des zulässigen Spritzabstandsbereichs von Spritzpulverpartikeln getroffen werden können.

Fig. 5 zeigt schematisch eine Anordnung, bei der sich mehrere kleine zu beschichtende Turbinenschaufeln 31 mit einem maximalen Durchmesser $d_1$ in einer ortsfesten Planetengetriebeeinheit 30 um die zentrale Achse 32 der Planetengetriebeeinheit drehen, gleichzeitig aber auch um ihre eigenen Achsen 35 rotieren, wobei die Abmessungen der Planetengetriebeeinheit 30 so gewählt sind, dass sich alle Teile 31 innerhalb des zulässigen Spritzabstandsbereiches 34 bewegen. So ist gesichert, dass die aufgrund der Lateralausdehnung des Plasmastrahles 35 an dem vordersten Teil 31 vorbeifliegende Spritzpulverpartikel, die übrigen, sich hinter den vordersten befindlichen Teile 31 innerhalb des zulässigen Spritzabstandsbereiches 34 treffen. Damit wird gleichzeitig die Ausbeute der Beschichtung dadurch stark verbessert, dass praktisch der gesamte Plasmastrahlquerschnitt zur Beschichtung beiträgt. Darin und in der deutlichen Spritzzeitverringerung für die Beschichtung mehrerer Teile gleichzeitig im Vergleich zur Einzelbeschichtung liegen insbesondere die Vorteile der vorliegenden Erfindung.

Eine gleichzeitige Beschichtung mehrerer Teile ist folglich nur erstrebenswert, wenn die Lateralausdehnung des Plasmastrahles (Zone I und Zone II in Fig. 2), projiziert auf die Oberfläche des zu beschichtenden Teiles, diese wenigstens in einer Richtung übertrifft. Je nach Grösse des zu beschichtenden Einzelteils kann die Planetengetriebeeinheit 30 8, 7, 6, 5, 4 oder wenigstens 3 Satelliten aufweisen, wobei die Anzahl der Satellitenrotationen um die Achsen 33 pro Umdrehung des Gesamtplanetensystems um die Achse 32 z. B. mit Hilfe von geeigneten Zahnrädern so eingestellt wird, dass sich nach einer vollständigen Umdrehung des Systems um die Achse 32 ein Teil 31 in einer Stellung zum Plasmastrahl 35 befindet, welche gegenüber der Stellung eine Runde vorher um einen bestimmten Drehwinkel um die Achse 33 gedreht ist.

Im nachfolgenden wird hierzu ein Beispiel gegeben: Für das schon erwähnte NiCrAlY-Spritzpulver ergibt sich bei 40 mbar Kammerdruck ein möglicher Spritzabstandsbereich 34 von 120 mm. Für Turbinenschaufeln 31 mit einem maximalen Durchmesser $d_1$ = 37 mm kann damit die Planetengetriebeeinheit 30 6 Satelliten aufweisen. Für gleichmässige Schichtdickenverteilung auf allen Turbinenschaufeloberflächen (Turbinenfuss, -schaufel, -führungskanten, -übergangszonen und -plattformen) aller 6 Satelliten beträgt das Verhältnis der Satellitenrotation pro Umdrehung des Planetensystems um die zentrale Achse 32 z. B. 2,53. Damit ist die Stellung des einzelnen Satelliten nach Ausführung eines vollem Umlaufs um die zentrale Achse 32 um etwa 15° gedreht.

Neben den beiden genannten Vorteilen der Mehrfachbeschichtung gemäss der Erfindung (Ausnützung der Lateralausdehnung des Plasmastrahles, Verkürzung der Beschichtungszeit) ergibt sich überraschend noch eine weitere Steigerung der Beschichtungseffiziens, welche sich zudem günstig für die Schichtqualität und für die Schichtgleichmässigkeit auf den Oberflächen der zu beschichtenden Teile auswirkt. Wie in Fig. 6 dargestellt ist, verformt sich ein Spritzpulverpartikel 61 um so stärker nach dem Auftreffen auf der Substratoberfläche 22 (Partikel 62 bis 68), je welcher das Spritzpulver ist, d. h. je stärker es im Plasmastrahl erwärmt worden ist.

Ab einem bestimmten Erweichungsgrad (Grenze zwischen Partikel 65 und Partikel 66) ist die Verformung nach dem Auftreffen so stark, dass ein Teil 66a des Partikels reflektiert wird. Mit noch steigender Partikeltemperatur (Partikel 67, 68) wächst der Spritzverlust durch Teilreflexion. Die entstehende Schicht dagegen ist umso dichter und die Restporosität ist umso kleiner, je höher die Partikeltemperatur beim Aufprall auf der Substratoberfläche 22 ist. Da nun beim Beschichten mehrere Teile gleichzeitig praktisch fast der gesamte reflektierte Spritzanteil von den benachbarten Proben aufgefangen wird, kann mit Partikeltemperaturen gespritzt werden, welche sehr hohe Spritzschichtdichten ermöglicht, ohne dass die Beschichtungseffizienz wesentlich verringert wird. Dieser Spritzverlust durch Teilreflexion ist auch dafür verantwortlich, dass z. B. konkave Beschichtungsflächen bei der Einzelteilbeschichtung eine höhere Schichtdicke besitzen als konkave Flächen bei sonst gleichen Beschichtungsbedingungen. Bei der erfindungsgemässen Mehrfachbeschichtung mit Planetengetriebeeinheit wird der Spritzverlust durch Teilreflexion wieder zur Beschichtung benützt, was z. B. die Schichtdicken-Unterschiede der konvexen Saugseite einer Turbinenschaufel und der konkaven Druckseite praktisch egalisiert.

Die Vakuum-Plasma-Beschichtung eines Teiles setzt sich aus mehreren Arbeitsabschnitten zusammen. Fig. 7 zeigt schematisch den Ablauf eines Vakuum-Plasma-Beschichtungszyklus im Druck-Zeit-Diagramm. Nach dem Evakuieren der Vakuum-Kammer (Kurvenabschnitt 71) auf einen bestimmten Endwert 72 wird durch Ar-Gaseinlass (Kurvenabschnitt 73) ein bestimmter Kammerunterdruck 74 eingestellt, bei welchem zunächst die Oberfläche der zu beschichtenden Teile mit Hilfe des übertragenen Lichtbogens mit negativer Polarität am Teil in einem Zerstäubungsprozess gereinigt wird. Gaskontamination, Wasserdampf und Oxidschichten werden abgestäubt. Das führt zu deutlicher Haftverbesserung der Spritzschichten. Zur rein mechanischen Verzahnung der Spritzschicht mit der durch Sandstrahlen aufgerauhten Oberfläche des zu beschichtenden Teiles kommt als zusätzliche Haftkomponente die Absättigung freier Oberflächenenergie gereinigter Substrate durch das Schichtmaterial. Wenn nun mehrere Teile gleichzeitig beschichtet werden sollen, müssen sie auch gleichzeitig vorher als eine Einheit gereinigt werden können. Das wird dadurch bewerkstelligt, dass sich die ganze Planetengetriebeeinheit 30 im Stromkreis des übertragenen Lichtbogens befindet. Während der Reinigung und auch später bei der Aufheizung (Kurvenabschnitt 75) mit Hilfe des übertragenen Lichtbogens positiver Polarität an der Planetengetriebeeinheit 30 wird diese mit so hoher Rotationsgeschwindigkeit gedreht, dass die einzelnen Satelliten gleichsam als optisch geschlossene Ringfläche erscheinen, auf deren dem Plasmabrenner gegenüberliegender Front der übertragene Lichtbogen kontinuierlich brennt. Da nach jeder Umdrehung des Planeten sich die einzelnen Satelliten um einen bestimmten Winkel gegenüber ihrer Ausgangsstellung weiterbewegt haben, wird so die gesamte Oberfläche der zu beschichtenden Teile gereinigt und/oder aufgeheizt. Der Strom des übertragenen Lichtbogens ist dabei ständig auf wenigstens zwei der zu beschichtenden Teile verteilt. Dadurch wird die Anpassung der Stromdichte an die Oberflächenkonfiguration der zu bechichtenden Teile unkritischer. Die Gefahr der Zerstörung und/oder Überhitzung materialarmer Bereiche wie z. B. die Austrittskante einer Turbinenschaufel ist stark vermindert.

Nach der Reinigung und Aufheizung, welche nicht notwendigerweise bei unterschiedlichen Kammerunterdrücken stattfinden müssen, erfolgt die Beschichtung (Kurvenabschnitt 76) und, falls mehrere Schichten gewünscht werden, die weitere Beschichtung (Kurvenabschnitt 77) bei den dafür notwendigen Vakua. Nach dem Beschichten wird noch einmal evakuiert (Kurvenabschnitt 78), um die $H_2$-Konzentration in der Kammer abzusenken, falls mit $H_2$-Zusätzen zum Plasmagas gearbeitet wurde. Dann wird auf ein bestimmtes Druckniveau 79 mit Argon geflutet, um die beschichteten Teile auf die Temperatur abzukühlen, bei welcher ohne Schaden für die Schichten die Vakuum-Kammer mit Luft geflutet werden kann, um sie zu öffnen und die beschichteten Teile auszuwechseln.

Mit Hilfe interner Handlingssystem können zur Erhöhung der Anlagenproduktivität in einem Vakuumzyklus mehrere Teile nacheinander zerstäubungsgereinigt, aufgeheizt und beschichtet werden. Weiter können mehrere Planetengetriebeeinheiten nacheinander zerstäubungsgereinigt, aufgeheizt und beschichtet werden, welche z. B. auf einem grossen Rotationstisch ringförmig angeordnet sind, wobei ein Indexantrieb eine Planetengetriebeeinheit nach der anderen in die Position zum Plasmastrahl bringt. Es ist auch denkbar, dass ein kammerinterner Teilfördermechanismus die Planetengetriebeeinheiten nacheinander zur Beschichtungsposition transportiert und wieder entfernt.

**Patentansprüche**

1. Vakuum-Plasma-Beschichtungsanlage, mit einem in einer Unterdruckkammer angeordneten Plasmabrenner, der in mehreren Achsen gegenüber dem zu beschichtenden Teil (18) verschiebbar angeordnet ist, während das zu beschichtende Teil (18) gleichzeitig mit dem Plasmabrenner in mehreren Freiheitsgraden bewegbar angeordnet ist, dadurch gekennzeichnet, dass die Vorrichtung zum Bewegen des zu beschichtenden Teils (18) derart aufgebaut ist, dass sie mehrere Teile (31) gleichzeitig hält, dass die Teile (31) gleichzeitig und/oder nacheinander durch den Plasmastrahl (14, 35) bewegbar sind, dass jeweils das dem Plasmabrenner nächste Teil (31) derart im Plasmastrahl (14, 35) angeordnet ist, dass sich dieser wenigstens zeitweise lateral über eine Aussenabmessung dieses Teils (31) hinaus erstreckt, und dass sich alle zu beschichtenden Teile (31) immer innerhalb eines vorbestimmten Spritzabstandsbereichs (34) bewegen, wenn sie sich im Plasmastrahl (14, 35) befinden.

2. Vakuum-Plasma-Beschichtungsanlage nach Anspruch 1, dadurch gekennzeichnet, dass die von dem Plasmabrenner weiter entfernten Teile (31) innerhalb des vorbestimmten Spritzabstandsbereiches (34) durch den Plasmastrahl (14, 35) zurückführbar sind.

3. Vakuum-Plasma-Beschichtungsanlage nach Anspruch 1 oder 2, dadurch gekennzeichnet, dass die zu beschichtenden Teile (31) auf einer Kreisbahn durch den Plasmastrahl (14, 35) führbar und um ihr eigenen Achsen (33) drehbar sind.

4. Vakuum-Plasma-Beschichtungsanlage nach einem der Ansprüche 1 bis 3, dadurch gekennzeichnet, dass die zu beschichtenden Teile (31) auf den Satelliten einer Planetengetriebeeinheit (30) angeordnet sind.

5. Vakuum-Plasma-Beschichtungsanlage nach Anspruch 4, dadurch gekennzeichnet, dass mehrere Planetengetriebeeinheiten (30) nacheinander durch einen Takt und/oder Indexantrieb in den Plasmastrahl (14, 35) bewegbar sind.

6. Vakuum-Plasma-Beschichtungsanlage nach Anspruch 5, dadurch gekennzeichnet, dass die Planetengetriebeeinheiten (30) auf einem Rotationstisch angeordnet sind.

7. Vakuum-Plasma-Beschichtungsanlage nach einem der vorhergehenden Ansprüche, dadurch gekennzeichnet, dass der Spritzabstandsbereich (34) durch Schmelztemperatur, Wärmeleitfähigkeit, Wärmekapazität, Kornkonfiguration und minimale und maximale Korngrösse des Spritzpulvers bestimmt ist.

8. Vakuum-Plasma-Beschichtungsanlage nach einem der vorhergehenden Ansprüche, dadurch gekennzeichnet, dass sich die zu beschichtenden Teile (31) nach einem vollständigen Umlauf um eine zentrale Achse (32) um ihre eigene Achse (33) gegenüber ihrer Ausgangsstellung um einen festgelegten Drehwinkel weiterbewegt haben.

9. Vakuum-Plasma-Beschichtungsanlage nach einem der vorhergehenden Ansprüche, dadurch gekennzeichnet, dass die zu beschichtenden mehreren Teile (31) nacheinander gemeinsam durch einen Lichtbogen negativer Polarität an den Teilen (31) zerstäubungsreinigbar, durch einen Lichtbogen positiver Polarität an den Teilen (31) aufheizbar und durch in die Plasmaflamme injektierte und aufgeschmolzene Spritzpulverpartikel beschichtbar sind.

10. Vakuum-Plasma-Beschichtungsanlage nach Anspruch 9, dadurch gekennzeichnet, dass die zu beschichtenden Teile (31) mit einer solchen Geschwindigkeit durch den Plasmastrahl (14, 35) bewegbar sind, dass beim Zerstäubungsreinigen und beim Aufheizen der Lichtbogen auf den dem Plasmabrenner zugewandten Flächen der Teile (31) kontinuierlich brennt.

**Claims**

1. Vacuum plasma coating system comprising, in a low pressure chamber, a plasma torch which is arranged for displacement along a plurality of axes relative to a part (18) to be coated, whilst the part (18) to be coated is arranged for movement together with the plasma torch with a plurality of degrees of freedom, characterised in that the device for moving the part (18) to be coated is constructed in such manner that it holds a plurality of parts (31) simultaneously, in that the parts (31) are movable simultaneously and/or sequentially through the plasma jet (14, 35), in that in each case the next part (31) for the plasma torch is arranged in the plasma jet (14, 35) in such manner that the jet extends at least occasionally laterally beyond an external dimension of this part (31), and in that all parts (31) to be coated move within a predetermined spray distance range (34) when they are located in the plasma jet (14, 35).

2. Vacuum plasma coating system according to claim 1 characterised in that the parts (31) furthest away from the plasma torch can be guided back through the plasma jet (14, 35) within the predetermined spray distance range (34).

3. Vacuum plasma coating system according to claim 1 or 2 characterised in that the parts (31) to be coated can be guided on a circular path through the plasma jet (14, 35) and are rotatable about their own axes (33).

4. Vacuum plasma coating system according to any one of claims 1 to 3 characterised in that the parts (31) to be coated are arranged on the satellites of a planetary drive unit (30).

5. Vacuum plasma coating system according to claim 4 characterised in that a plurality of planetary drive units (30) are movable sequentially by a cycling and/or index drive into the plasma jet (14, 35).

6. Vacuum plasma coating system according to claim 5 characterised in that the planetary drive units (30) are arranged on a rotatable table.

7. Vacuum plasma coating system according to any one of the preceding claims characterised in that the spray distance range (34) is determined by melt temperature, heat conductivity, heat capacity, particle configuration and minimum and maximum particle sizes of the spray powder.

8. Vacuum plasma coating system according to any one of the preceding claims characterised in that after one complete rotation about a central axis (32) the parts (31) to be coated have moved on by a predetermined rotational angle about their own axis (33) relative to their start position.

9. Vacuum plasma coating system according to any one of the preceding claims characterised in that the plurality of parts (31) to be coated are sequentially and in common sputter cleanable by an arc of negative polarity on the parts (31), heatable by an arc of positive polarity on the parts (31) and coatable by means of spray powder particles injected into the plasma flame and melted.

10. Vacuum plasma coating system according to claim 9 characterised in that the parts (31) to be coated are movable through the plasma jet (14, 35) with a speed such that upon sputter cleaning and upon heating the arc burns continuously on the surfaces of the parts (31) facing the plasma torch.

**Revendications**

1. Installation de revêtement au plasma sous vide, comprenant un brûleur à plasma disposé dans une chambre à dépression, qui est agencé de façon à pouvoir se déplacer en translation selon plusieurs axes par rapport à la pièce à revêtir (18), cependant que la pièce à revêtir (18) est agencée de façon à pouvoir se déplacer simultanément avec le brûleur à plasma, avec plusieurs degrés de liberté, caractérisée en ce que le dispositif servant à déplacer la pièce à revêtir (18) est construit de manière à tenir simultanément plusieurs pièces (31), de manière que les pièces (31) puissent circuler simultanément et/ou l'une après l'autre à travers le jet de plasma (14, 35), de manière que la pièce (31) la plus proche du brûleur à plasma soit disposée dans le jet de plasma (14, 35) de telle façon que, au moins de temps à autre, ce jet s'étende latéralement au-delà d'une dimension extérieure de cette pièce (31) et de manière que toutes les pièces (31) à revêtir circulent en restant toujours dans les limites d'une plage de distances de projection (34) prédéterminée lorsqu'elles se trouvent dans le jet de plasma (14, 35).

2. Installation de revêtement au plasma sous vide selon la revendication 1, caractérisée en ce que les pièces (31) qui sont les plus éloignées du brûleur à plasma peuvent être ramenées dans les limites de la plage de distances de projection prédéterminée (34) à travers le jet de plasma (14, 35).

3. Installation de revêtement au plasma sous vide selon la revendication 1 ou la revendication 2, caractérisée en ce que les pièces (31) à revêtir peuvent circuler sur une trajectoire circulaire à travers le jet de plasma (14, 35) et peuvent tourner autour de leurs propres axes (33).

4. Installation de revêtement au plasma sous vide selon une des revendications 1 à 3, caractérisée en ce que les pièces (31) à revêtir sont disposées sur les satellites d'une unité de mécanisme planétaire (30).

5. Installation de revêtement au plasma sous vide selon la revendication 4, caractérisée en ce que plusieurs unités de mécanismes planétaires (30) peuvent être introduites l'une après l'autre dans le jet de plasma (14, 35) au moyen d'un mécanisme pas à pas et/ou d'un entraînement divisionnaire.

6. Installation de revêtement au plasma sous vide selon la revendication 5, caractérisée en ce que les unités de mécanismes planétaires (30) sont montées sur une table tournante.

7. Installation de revêtement au plasma sous vide selon une des revendications précédentes, caractérisée en ce que la plage de distances de projection (34) est déterminée par la température de fusion, la conductibilité thermique, la capacité thermique, la configuration des grains et les grosseurs minimale et maximale du grain de la poudre projetée.

8. Installation de revêtement au plasma sous vide selon une des revendications précédentes, caractérisée en ce que, après un tour complet autour de l'axe central (32), les pièces à revêtir (31) ont tourné d'un angle de rotation déterminé autour de leur propre axe (33) par rapport à leur position de départ.

9. Installation de revêtement au plasma sous vide selon une des revendications précédentes, caractérisée en ce que les pièces multiples (31) à revêtir peuvent être, toutes ensemble, successivement nettoyées par pulvérisation par un arc électrique présentant sa polarité négative sur les pièces (31), puis chauffées par un arc électrique présentant sa polarité positive sur les pièces (31), puis revêtues par des particules de poudre projetées qui sont injectées dans la flamme de plasma et fondues.

10. Installation de revêtement au plasma sous vide selon la revendication 9, caractérisée en ce que les pièces à revêtir (31) peuvent être mises en mouvement à travers le jet de plasma (14, 35) à une vitesse telle que, pendant le nettoyage par pulvérisation et pendant le chauffage, l'arc électrique brûle continuellement sur les surfaces des pièces (31) qui sont dirigées vers le brûleur à plasma.

FIG. 1

20
-
+
16a
15
H2O
16b
17
14
19
H2O
10
12
18
13
H2O
11
+
-
-
+
21

FIG. 5

31
11
17
35
30
d
33
32
d1
34

FIG. 2

22
II
II
I
II
III
IV

FIG. 3

Schichtdicke
I
II
II
III
III
IV
IV
22

FIG. 4

T
s
$T_D$
k
g
$T_S$
a
a'
b'
b
d
34

FIG. 6

61
62
63
64
65
66
66a
67
67a
68
68a
22

FIG. 7

P(mbar)
1000
100
10
1
$10^{-1}$
$10^{-2}$
71
72
73
74
75
76
77
78
79
80
t